# EUROPEAN PATENT APPLICATION

(11) **EP 1 125 787 A2**
(43) Date of publication of application: **22.08.2001**
(21) Application number: 01101698.7
(22) Date of filing: 30.01.2001
(51) Int. Cl.: B60M 5/00

(54) **Clamp for providing the electrical connection of a cable to a rail, particularly for short-circuiting a railroad power line during maintenance work**

(30) Priority: 17.02.2000 IT MI000273
(71) Applicant: Pfisterer S.r.l., 20094 Corsico (Milano) (IT)
(72) Inventor: Nannini, Osvaldo, 20146 Milano (IT)
(74) Representative: Modiano, Guido, Dr.-Ing.

(57) **Abstract**

A clamp for providing the electrical connection of a cable to a rail, particularly for short-circuiting a railroad power line during maintenance work, comprising a supporting element (2) provided with two jaws (3, 4) which can engage, on mutually opposite sides with respect to the web (10) of the rail (8), the fishing planes (5, 6) of the upper portion or head (7) of the rail (8). The supporting element (2) has, between the two jaws (3, 4), a clamping element (11) movable along an action axis which is substantially perpendicular to the rolling surface of the rail (8) in order to act on the rolling surface of the rail and apply to the jaws (3, 4), engaged with the corresponding fishing planes of the head of the rail, an upward traction. The two jaws (3, 4) are pivoted to the supporting element (2) about two mutually parallel pivoting axes arranged laterally to the action axis of the clamping element; the pivoting axis (13, 14) of one jaw and the portion of the same jaw that can engage the corresponding fishing plane of the head of the rail are arranged laterally, on mutually opposite sides, with respect to the action axis of the clamping element.

## Description

The present invention relates to a clamp for providing the electrical connection of a cable to a rail, particularly for short-circuiting a railroad power line during maintenance work.

It is known that in order to safely perform ordinary and extraordinary work on railroad lines or at depots, after the section of the power line affected by the work has been disconnected, it is necessary to short-circuit the line so as to protect the operator even if the line section that is being worked on is accidentally powered.

The line is short-circuited by connecting the electrical contact cables, i.e., the electrical cables that are contacted by the pantograph of the locomotives, and the rail by means of a cable, which is connected to the electrical contact cables with one of its ends and to the rail with its other end. The connection of the electrical cable to the rail is generally provided by means of adapted clamps.

Clearly, the safety in the short-circuiting and therefore the safety assurances for the protection of the operators are closely linked to the clamping capacity and to the resistance to any short-circuit current of the devices used to provide the electrical connection of said cable to the electrical contact cables and to the rail.

Currently, the cable used for short-circuiting and the rail are connected by using a bronze-aluminum clamp which is obtained by casting and is substantially constituted by a block having a pair of parallel jaws formed monolithically with the block and are arranged at a mutual distance which is greater than the width of the head or upper portion of the rail.

Between the pair of jaws, the block has a female thread in which a threaded shaft engages; the shaft can be actuated in order to clamp one end of the electrical cable, used for short-circuiting, against the rolling surface of the rail. The opposite end of the threaded shaft is generally provided with a lever which can be actuated in order to turn the threaded shaft during the clamping or release of the end of the short-circuiting cable.

The pair of jaws is engaged by means of its free ends, i.e., its ends that are opposite to the ones connected to the supporting block, under the head of the rail by turning the block about a vertical axis before clamping the end of the shorting cable. The clamping of the shorting cable against the rolling surface generates a traction on the jaws, achieving the locking of the jaw on the rail.

This type of clamp has the drawback that it has high manufacturing costs owing to the fact that the block and the jaws are formed monolithically by casting.

Moreover, if a shorting current should flow, the flow of current might apply to the shorting cable a sudden traction which might disengage the clamp from the rail.

Owing to the fact that the engagement of the jaws of this clamp with the rail is achieved by turning the block about a vertical plane which is perpendicular to the rolling surface, during its use any accidental impacts in the opposite direction with respect to the rotation imparted in order to engage the clamp with the rail can cause the disengagement of the clamp from the rail.

A clamp with parallel jaws is also known being substantially constituted by a supporting block which is similar to the block of the above-described clamp, with a pair of jaws which instead of being formed monolithically with the supporting block can slide freely toward or away from each other.

In this type of clamp, owing to the fact that the jaws are free to slide toward or away from each other, and to the fact that they engage with their free end against the usually inclined fishing planes, the clamping action, which is provided by means of a threaded shaft being coupled to the female thread formed inside the supporting block, may not offer adequate assurances of steadiness, since the clamping force can cause a mutual spacing of the pair of jaws, thus reducing the engagement of the jaws with the rail.

The aim of the present invention is to solve the above problems by providing a clamp for performing the electrical connection of a cable to a rail, particularly for short-circuiting a railroad power line during maintenance work, which has high safety against accidental disengagement from the rail during use.

Within this aim, an object of the invention is to provide a clamp which offers the highest assurances of safety as regards the steadiness of the clamping with the rail even if a shorting current accidentally flows through the shorting cable.

Another object of the invention is to provide a clamp in which the clamping force acts so as to strengthen the engagement of the clamp with the rail.

This aim and these and other objects which will become better apparent hereinafter are achieved by a clamp for providing the electrical connection of a cable to a rail, comprising a supporting element provided with two jaws which can engage, on mutually opposite sides with respect to the web of the rail, the fishing planes of the upper portion or head of a rail which forms the rolling surface of the rail; said supporting element having, between said two jaws, a clamping element movable along an action axis which is substantially perpendicular to the rolling surface in order to act on the rolling surface of the rail and apply to said jaws, engaged with the corresponding fishing planes of the head of the rail, an upward traction, characterized in that said two jaws are pivoted to said supporting element about two mutually parallel pivoting axes arranged laterally to the action axis of said clamping element, the pivoting axis of one jaw and the portion of said jaw that can engage the corresponding fishing plane of the head of the rail being arranged laterally, on mutually opposite sides, with respect to the action axis of said clamping element.

Further characteristics and advantages of the present invention will become better apparent from the following detailed description of a preferred but not exclusive embodiment of the clamp according to the invention, illustrated only by way of non-limitative example in the accompanying drawings, wherein:
Figure 1 is a side elevation view of the clamp according to the invention, applied to a rail;
Figure 2 is a sectional view of Figure 1, taken along the line II-II.

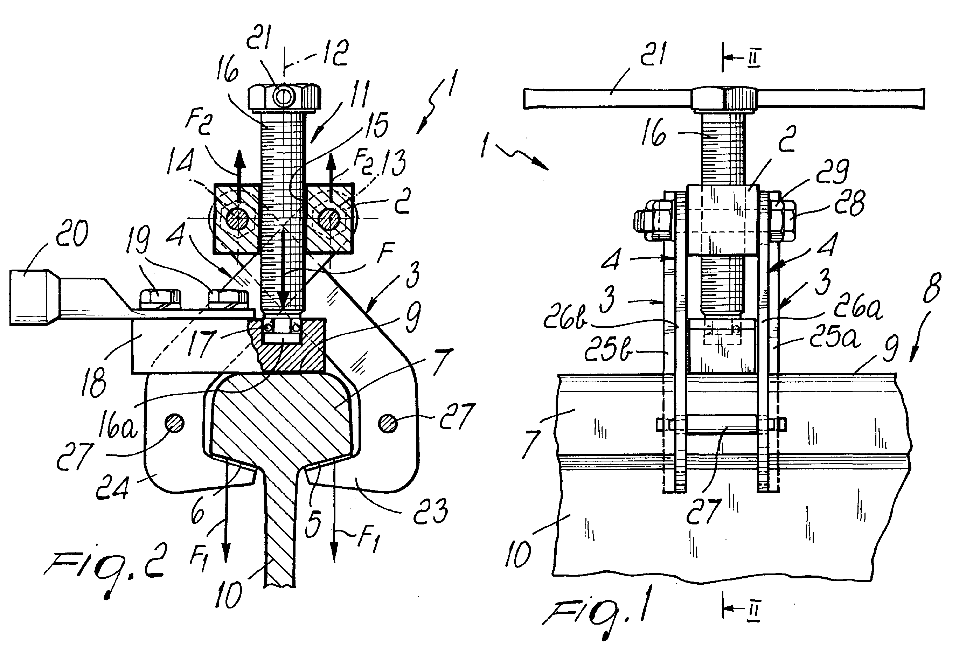

With reference to the figures, the clamp according to the invention, generally designated by the reference numeral 1, comprises a supporting element 2 being provided with two jaws 3 and 4 which are preferably hook-shaped and can engage fishing planes 5 and 6 of an upper portion or head 7 of a rail 8, i.e., the planes that constitute the lower face of the head 7 and join to a web 10 of the rail.

The jaws 3 and 4 engage the fishing planes 5 and 6 on mutually opposite sides with respect to the web 10 of the rail 8.

The supporting element 2 has, between the jaws 3 and 4, a clamping element 11 movable along an action axis 12 which is substantially perpendicular to a rolling surface 9 in order to act on the rolling surface 9 of the rail 8 and apply an upward traction to the jaws 3 and 4, which are engaged with the corresponding fishing planes 5 and 6.

According to the invention, the jaws 3 and 4 are pivoted to the supporting element 2 about two pivoting axes 13 and 14 which are parallel to each other and are arranged laterally to the action axis 12 of the clamping element 11. The pivoting axis of each jaw 3 and 4 and the portion of the jaw 3 and 4 that can engage the corresponding fishing plane 5, 6 of the head 7 of the rail 8 are arranged laterally, on mutually opposite sides, with respect to the action axis 12 of the clamping element 11. In this manner, the clamping force developed by the clamping element 11 leads to a reinforcement of the engagement of the jaws 3 and 4 with the rail 8, as will become apparent hereinafter.

More particularly, the supporting element 2 is constituted by a supporting block which is crossed by a female thread 15, whose axis, when the clamp is in its operating condition, is orientated vertically and constitutes the action axis 12. The clamping element 11 is constituted by a threaded shaft 16 which couples to the female thread 15 and can rotate in order to move axially along the axis 12 of the female thread 15 with respect to the supporting block 2. The shaft 16 has an end 16a, which is designed to be directed toward the rail 8, which is engaged so that it can rotate but is locked axially, for example by means of pins 17, in a contact block 18 made of electrically conducting material, to which the end of an electrical cable 20 used for shorting the line is connected for example by means of screws 19.

The jaws 3 and 4 are pivoted to the supporting block 2 about the respective pivoting axes 13 and 14, which are mutually parallel and are orientated at right angles to the axis 12. The pivoting axes 13 and 14 are arranged laterally, on mutually opposite sides, with respect to the female thread 15.

The other end of the threaded shaft 16, which protrudes upwardly from the supporting block 2, is engaged by a transverse lever 21 in order to actuate the threaded shaft 16 with an intense clamping force.

Each one of the jaws 3 and 4 has a first end portion 23 and 24 which can engage the corresponding fishing plane 5 and 6 of the rail 8 and a second end portion which is pivoted to the supporting block 2. The two ends of each jaw 3 and 4 are mutually connected by an arm, and the arms of the two jaws 3 and 4, owing to the position of the pivoting axes 13 and 14, cross each other.

Conveniently, each jaw 3 and 4 comprises two jaws, designated by the reference numerals 25a, 25b, 26a, 26b, which are arranged on mutually parallel planes and are mutually rigidly connected to each other, for example by means of rivets 27.

Preferably, the pair of jaws 26a and 26b that constitutes the jaw 4 is arranged inside the other pair of jaws 25a, 25b that constitutes the jaw 3.

The pair of jaws 25a and 26a is pivoted to a face of the supporting block 2, while the other pair of jaws 25b, 26b is pivoted to the opposite side of the block 2.

The pivoting of the jaws 3, 4 to the supporting block 2 can be provided by means of bolts 28 and 29 by arranging, between the supporting block 2 and the pair of jaws 25a and 25b located outside the pair of jaws 26a and 26b, spacer washers which are not visible in the figures and are as thick as the pair of jaws 26a and 26b.

Conveniently, the surfaces of the ends 23, 24 of the jaws 3, 4 that are designed to engage against the fishing planes 5 and 6 of the head 7 and of the rail 8 are inclined so as to match the inclination of the fishing planes 5 and 6, so as to achieve a substantially coplanar engagement with the fishing planes 5 and 6.

The use of the clamp according to the invention is as follows.

The clamp is arranged on top of the rail 8, placing the ends 23 and 24 of the jaws 3 and 4 under the head 7 so that the ends 23 and 24 of the jaws 3 and 4 face the fishing planes 5 and 6.

The threaded shaft 16 is then turned by means of the lever 21 so that said shaft gradually approaches, with its end engaged with the contact block 18, the rolling surface 9 of the rail 8, producing the gradual clamping of the contact block 18 against the rolling surface 9 of the rail.

This clamping of the contact block 18 against the rolling surface 9 of the rail 8 locks the jaws 3 and 4 against the fishing planes 5 and 6 of the rail, firmly coupling the clamp to the rail.

It should be noted that the clamping force F that is applied by the threaded shaft 16 to the contact block 18 and is transmitted to the rolling surface 9 of the rail 8 generates, by reaction, a force F₁ on the ends 23 and 24 of the jaws 3 and 4 and a force F₂ at the axes 13 and 14 for the pivoting of the jaws 3 and 4 to the supporting block 2. The forces F₁ and F₂ are orientated parallel to the action axis 12 and generate, on the corresponding jaw 3 and 4, a torque which acts so as to reinforce the engagement of the corresponding jaw 3 or 4 with the corresponding fishing plane 5 and 6 of the rail. In this manner, the clamp according to the invention ensures excellent steadiness of its grip on the rail which avoids with absolute safety any accidental disengagement of the clamp from the rail even in the presence of intense shorting currents which might be transmitted along the shorting cable 20.

In practice it has been observed that the clamp according to the invention fully achieves the intended aim and objects, since it ensures excellent clamping of the shorting cable against the rail and offers adequate assurances of safety against accidental disengagement of said clamp from the rail during its use.

The clamp thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the state of the art.

The disclosures in Italian Patent Application No. MI2000A000273 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A clamp for performing the electrical connection of a cable to a rail, comprising a supporting element provided with two jaws which can engage, on mutually opposite sides with respect to the web of the rail, the fishing planes of the upper portion or head of a rail which forms the rolling surface of the rail; said supporting element having, between said two jaws, a clamping element movable along an action axis which is substantially perpendicular to the rolling surface in order to act on the rolling surface of the rail and apply to said jaws, engaged with the corresponding fishing planes of the head of the rail, an upward traction, characterized in that said two jaws are pivoted to said supporting element about two mutually parallel pivoting axes arranged laterally to the action axis of said clamping element, the pivoting axis of one jaw and the portion of said jaw that can engage the corresponding fishing plane of the head of the rail being arranged laterally, on mutually opposite sides, with respect to the action axis of said clamping element.

2. The clamp according to claim 1, characterized in that said supporting element comprises a supporting block which is crossed by a female thread whose axis coincides with said action axis; said clamping element being constituted by a threaded shaft which couples to said female thread and can rotate in order to move axially with respect to said supporting block; the end of said shaft that is designed to be directed toward the rail being engaged so as to allow rotation but be locked axially, in a contact block made of electrically conducting material which is connected to the end of an electrical cable.

3. The clamp according to claims 1 and 2, characterized in that said jaws are pivoted to said supporting block about respective pivoting axes which are parallel to each other and are orientated at right angles to said action axis; said pivoting axis being arranged laterally to said female thread on mutually opposite sides.

4. The clamp according to one or more of the preceding claims, characterized in that each one of said jaws has a first end portion which can engage the corresponding fishing plane of the head of the rail and a second end portion which is pivoted to said supporting block, said end portions being mutually connected by an arm of the jaw; the arms of said two jaws being crossed.

5. The clamp according to one or more of the preceding claims, characterized in that each one of said jaws comprises a pair of jaws which are arranged on mutually parallel planes and are mutually rigidly connected.

6. The clamp according to one or more of the preceding claims, characterized in that one pair of said jaws is arranged inside the other pair of jaws.

7. The clamp according to one or more of the preceding claims, characterized in that said threaded shaft protrudes upwardly, with one of its ends, from said supporting block, said end of the threaded shaft being engaged by a transverse lever for the rotation of said threaded shaft.

8. The clamp according to one or more of the preceding claims, characterized in that said jaws are hook-shaped.

9. The clamp according to one or more of the preceding claims, characterized in that the surfaces of the ends of said jaws designed to engage the fishing planes of the head of the rail are inclined so as to match said fishing planes for a coplanar mating of said ends of the jaws with said fishing planes.
